# FASCICULE DE BREVET EUROPEEN

(11) **EP 4 204 669 B1**
(45) Date de publication et mention de la délivrance du brevet: **05.06.2024**
(21) Numéro de dépôt: 21762584.7
(22) Date de dépôt: 31.08.2021
(51) Int. Cl.: F01P 11/10, F01P 5/06, B60K 11/04, F01P 3/18, F04D 17/04, H02K 9/02, B60K 11/08, B60K 1/00

(54) **MODULE DE REFROIDISSEMENT POUR VÉHICULE AUTOMOBILE ÉLECTRIQUE À TURBOMACHINE TANGENTIELLE**
KÜHLMODUL FÜR EIN ELEKTRISCHES KRAFTFAHRZEUG MIT EINER TANGENTIALFLUSSTURBOMASCHINE
COOLING MODULE FOR AN ELECTRIC MOTOR VEHICLE, COMPRISING A TANGENTIAL-FLOW TURBOMACHINE

(30) Priorité: 31.08.2020 FR 2008837
(43) Date de publication de la demande: 05.07.2023
(73) Titulaire: VALEO SYSTEMES THERMIQUES, 78320 Le Mesnil Saint-Denis (FR)
(72) Inventeur: MAMMERI, Amrid, 78322 Le Mesnil-Saint-Denis Cedex (FR); ETIENNE, Erwan, 78322 Le Mesnil-Saint-Denis Cedex (FR); DURBECQ, Gael, 78322 Le Mesnil-Saint-Denis Cedex (FR); AZZOUZ, Kamel, 78322 Le Mesnil-Saint-Denis Cedex (FR)
(74) Mandataire: Valeo Systèmes Thermiques
(86) Numéro de dépôt international: PCT/EP2021/074034
(87) Numéro de publication internationale: WO 2022/043586

(56) Documents cités:
- EP-A1- 0 304 638
- EP-A1- 1 715 157
- GB-A- 2 117 721
- US-A- 5 060 720
- US-A1- 2005 029 027

## Description

L'invention se rapporte à un module de refroidissement pour véhicule automobile électrique, à turbomachine tangentielle. L'invention vise également un véhicule automobile électrique muni d'un tel module de refroidissement.

Un module de refroidissement (ou module d'échange de chaleur) d'un véhicule automobile comporte classiquement au moins un échangeur thermique et un dispositif de ventilation adapté à générer un flux d'air traversant l'au moins un échangeur thermique. Le dispositif de ventilation permet ainsi, par exemple, de générer un flux d'air traversant l'échangeur thermique à l'arrêt du véhicule. Ce dispositif de ventilation se présente par exemple sous la forme d'une turbomachine tangentielle entraînée par un moteur disposé à l'extérieur du module de refroidissement. En fonction de sa charge de travail, ce moteur électrique doit également être refroidi.

Cependant, du fait de sa position de montage, le refroidissement de ce dernier n'est pas optimal et il peut y avoir des risques de surchauffe.

Le document GB2117721A divulgue un module de refroidissement selon le préambule de la revendication 1.

Un but de l'invention est de proposer un module de refroidissement pour véhicule automobile électrique ne présentant pas au moins certains des inconvénients susmentionnés.

À cet effet, l'invention a pour objet un module de refroidissement pour véhicule automobile à moteur électrique, le module de refroidissement comprenant au moins un échangeur thermique, au moins une turbomachine tangentielle apte à créer un premier flux d'air traversant le au moins un échangeur thermique, un boîtier configuré pour loger le au moins un échangeur thermique et ladite au moins une turbomachine tangentielle, le boîtier comportant une première ouverture d'aspiration et une ouverture d'évacuation entre lesquelles circule le premier flux d'air, au moins un moteur électrique de contrôle de la rotation de ladite au moins une turbomachine tangentielle, le moteur électrique étant disposé sur la paroi externe du boîtier, ledit moteur électrique comprenant au moins une entrée et une sortie d'air, le module de refroidissement étant caractérisé en ce que le boîtier comporte une deuxième ouverture d'aspiration, la sortie d'air du au moins un moteur étant en connexion fluidique avec ladite deuxième ouverture d'aspiration de sorte à permettre la circulation d'un deuxième flux d'air passant successivement par l'entrée d'air du moteur, la sortie d'air du moteur et la deuxième ouverture d'aspiration du boîtier pour rejoindre le premier flux d'air au sein du boîtier.

Un tel module de refroidissement permet d'augmenter les performances du refroidissement du moteur de la turbomachine tangentielle tout en évitant une surconsommation dudit moteur électrique. La connexion fluidique entre la deuxième ouverture d'aspiration du boîtier et l'entrée d'air du capot permet de guider un deuxième flux d'air à travers le moteur électrique de la turbomachine avec un débit d'air frais suffisant.

Par ailleurs, cet agencement peut amener une plus grande liberté en termes d'architecture du module thermique, cet agencement permet par exemple de réduire l'encombrement du module d'échange thermique tout en l'allégeant.

Avantageusement, la turbomachine tangentielle permet de créer un flux d'air à travers tous les échangeurs thermiques avec un bien meilleur rendement que si un axial était mis en oeuvre.

L'invention peut en outre comprendre un ou plusieurs des aspects suivants pris seuls ou en combinaison :
- le boîtier comporte un carter formant une chambre à l'intérieur de laquelle débouche à la fois la deuxième ouverture d'aspiration et la sortie d'air du moteur électrique ;
- le carter comporte une ouverture dans laquelle est inséré le moteur électrique de sorte que l'entrée d'air du moteur électrique soit en dehors de la chambre ;
- le moteur électrique comporte un capot ayant une forme en coupelle circulaire comportant une paroi de fond et un rebord périphérique ;
- la sortie d'air dudit moteur électrique est réalisée par au moins un orifice agencé dans la paroi de fond dudit capot ;
- une pluralité d'orifices sont répartis autour de l'axe de révolution du capot en forme de coupelle du moteur électrique ;
- les orifices du capot sont répartis avec un écart angulaire régulier autour de l'axe de révolution du capot du moteur électrique ;
- le moteur comprend un boîtier d'alimentation ;
- le capot est disposé de sorte à faire face audit boîtier d'alimentation, un espace est ménagé entre ledit boîtier d'alimentation et le rebord périphérique du capot de sorte à former l'entrée d'air dudit capot ;
- la sortie d'air du moteur est disposée en vis-à-vis de la deuxième ouverture d'aspiration du boîtier ;
- la deuxième ouverture d'aspiration du boîtier se situe sur une face latérale du module de refroidissement ;
- la face latérale s'étend perpendiculairement à l'axe de la turbine de la turbomachine tangentielle ;
- la deuxième ouverture d'aspiration du boîtier est disposée au niveau de l'axe de la turbine de la turbomachine tangentielle ;
- la deuxième ouverture d'aspiration du boîtier est disposée en amont du au moins un échangeur thermique ;
- la deuxième ouverture d'aspiration du boîtier est disposée entre la turbomachine tangentielle et le au moins un échangeur thermique ;
- le module de refroidissement comporte une pluralité d'échangeurs thermiques, notamment alignés suivant un axe d'empilement ;
- la deuxième ouverture d'aspiration du boîtier est disposée entre deux échangeurs thermiques de la pluralité d'échangeurs thermiques ;
- le module de refroidissement comporte une conduite d'acheminement d'air disposée sur une face externe du boîtier ;
- la conduite d'acheminement comporte un logement recouvrant le au moins un moteur électrique ;
- la conduite d'acheminement comporte un canal reliant l'entrée d'air du moteur électrique à une zone d'aspiration déportée du boîtier du module de refroidissement ;
- le module de refroidissement comporte au moins deux turbomachines tangentielles disposées parallèlement les unes aux autres ;
- chaque turbomachine tangentielle comporte un moteur électrique dédié ;
- le boîtier comporte une deuxième ouverture d'aspiration individuelle associée à chaque moteur électrique.

D'autres avantages et caractéristiques de l'invention apparaîtront plus clairement à la lecture de la description suivante donnée à titre d'exemple illustratif et non limitatif, et des dessins annexés parmi lesquels :
[Fig.1] La figure 1 représente schématiquement la partie avant d'un véhicule automobile à moteur électrique, vu de côté ;
[Fig. 2] La figure 2 représente une vue en perspective et en coupe partielle d'une face avant de véhicule automobile comprenant un exemple d'un mode de réalisation d'un module de refroidissement ;
[Fig. 3] La figure 3 représente une vue en perspective du moteur électrique de la turbomachine du module de refroidissement de la Figure 2 ;
[Fig. 4] La figure 4 représente une vue en coupe du moteur électrique de la Figure 3 ;
[Fig. 5] La figure 5 représente une vue de dessus d'un premier mode de réalisation du module de refroidissement de la figure 2 ;
[Fig. 6] La figure 6 représente une vue de dessus d'un deuxième mode de réalisation du module de refroidissement de la figure 2 ;
[Fig. 7] La figure 7 représente une vue de dessus d'un troisième mode de réalisation du module de refroidissement de la figure 2 ;
[Fig. 8] La figure 8 représente une vue de côté du module de refroidissement de la figure 2 ;
[Fig. 9] La figure 9 représente une vue de dessus d'une première variante du module de refroidissement de la figure 2 ;
[Fig. 10] La figure 10 représente une vue de côté du module de refroidissement de la figure 9 ;
[Fig. 11] La figure 11 représente une vue de dessus d'une deuxième variante du module de refroidissement de la figure 2 ;
[Fig. 12] La figure 12 représente une vue de côté du module de refroidissement de la figure 11 ;
[Fig. 13] La figure 13 représente une vue de dessus d'une troisième variante du module de refroidissement de la figure 2 ;
[Fig. 14] La figure 14 représente une vue de côté du module de refroidissement de la figure 13 ;
[Fig. 15] La figure 15 représente une vue de côté d'une quatrième variante du module de refroidissement de la figure 2 ;

Sur ces figures, les éléments identiques portent les mêmes numéros de référence.

On désigne les directions longitudinale, transversale et verticale indiquées sur certaines figures par le dièdre (X, Y, Z).

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description, on peut indexer certains éléments, comme premier élément ou deuxième élément. Dans ce cas, il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps.

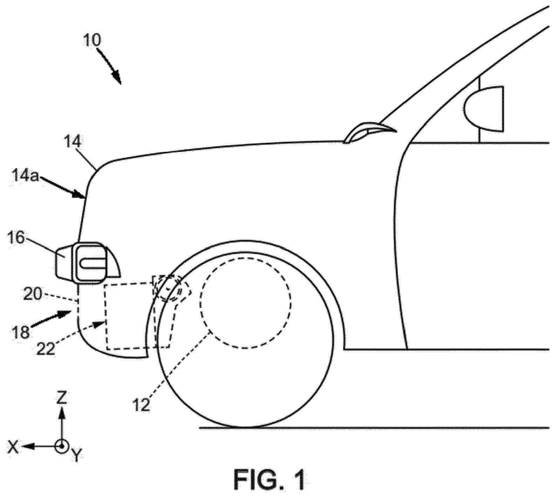

La figure 1 illustre de manière schématique la partie avant d'un véhicule automobile 10 à moteur électrique 12. Le véhicule 10 comporte notamment une carrosserie 14 et un pare-chocs 16 portés par un châssis (non représenté) du véhicule automobile 10. La carrosserie 14 définit une baie de refroidissement 18, c'est-à-dire une ouverture à travers la carrosserie 14. La baie de refroidissement 18 est ici unique. Cette baie de refroidissement 18 se trouve en partie basse de la face avant 14a de la carrosserie 14. Dans l'exemple illustré, la baie de refroidissement 18 est située sous le pare-chocs 16. Une grille 20 peut être disposée dans la baie de refroidissement 18 pour éviter que des projectiles puissent traverser la baie de refroidissement 18. Un module de refroidissement 22 est disposé en vis-à-vis de la baie de refroidissement 18. La grille 20 permet notamment de protéger ce module de refroidissement 22.

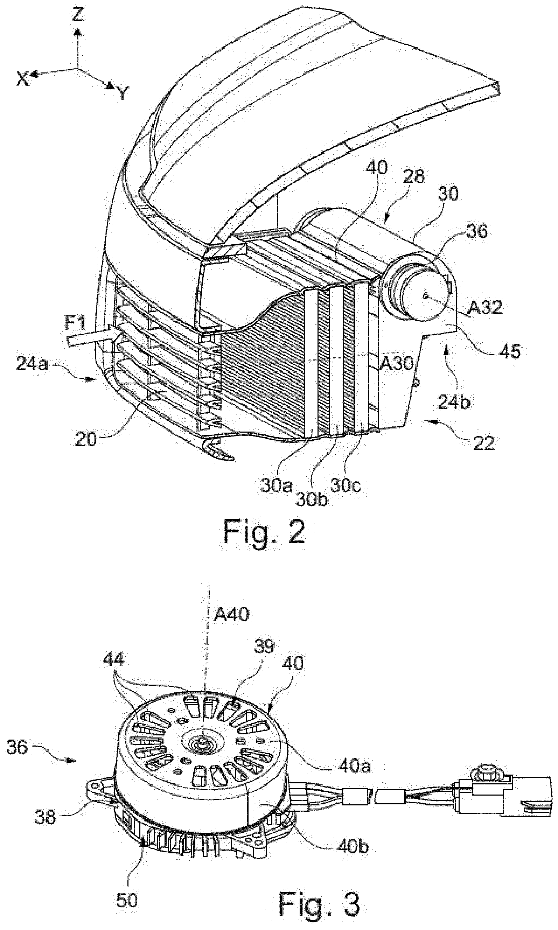

Le module de refroidissement 22 est plus nettement visible sur la figure 2. Tel qu'illustré sur cette figure 2, le module de refroidissement 22 comporte essentiellement un boîtier 24 formant un canal interne entre deux extrémités 24a, 24b opposées. Plus particulièrement, le boîtier 24 comporte une première ouverture d'aspiration 24a et une ouverture d'évacuation 24b entre lesquelles circule le premier flux d'air F1 généré par au moins une turbomachine 28 du module de refroidissement 22. En outre, la section du conduit formé dans le boîtier 24 est nettement supérieure au niveau de l'extrémité 24a qu'à son extrémité 24b opposée.

Le boîtier 24 permet de loger le au moins un échangeur thermique 30a-30c et la au moins une turbomachine tangentielle 28 qui est apte à créer un premier flux d'air F1 traversant le au moins un échangeur thermique 30a-30c.

Selon le mode de réalisation du module de refroidissement 22 illustré à la Figure 2, celui-ci comprend une pluralité d'échangeurs thermiques 30a-30c qui sont notamment alignés suivant un axe d'empilement A30. L'axe d'empilement A30 est notamment perpendiculaire à l'axe A32 de la turbine 32 de la turbomachine tangentielle 28. Les échangeurs thermiques 30a-30c sont disposés les uns derrière les autres dans le canal interne formé par le boîtier 24. Dans cet exemple, le module de refroidissement 22 comporte trois échangeurs thermiques 30a, 30b et 30c. Il est bien entendu tout à fait possible d'imaginer un module de refroidissement 22 comportant uniquement deux échangeurs thermiques 30a, 30b ou bien plus de trois échangeurs thermiques 30a-30c. L'échangeur thermique le plus en aval dans le sens de circulation du premier flux d'air F1, ici l'échangeur de chaleur 30c, est traversé par un fluide plus chaud et est disposé plus loin de l'extrémité 24a du boîtier 24 destiné à être disposée juste derrière la baie de refroidissement 18 que l'échangeur thermique le plus en amont, ici l'échangeur de chaleur 30a, qui est traversé par un fluide plus froid. La disposition des échangeurs thermiques 30a-30c les uns derrière les autres dans la direction axiale X du module de refroidissement 22 permet également de limiter l'encombrement du module de refroidissement 22 selon ses deux autres dimensions latérale et verticale.

La turbomachine tangentielle 28 comprend une turbine 32 qui peut également être qualifiée d'hélice tangentielle. La turbine 32 a une forme sensiblement cylindrique et présente un axe de rotation A32. Avantageusement, cet axe de rotation A32 est orienté sensiblement parallèlement à la direction latérale Y du au moins un échangeur thermique 30a-30c, comme illustré plus particulièrement sur la Figure 2.

Le module de refroidissement 22 comporte également au moins un moteur 36 électrique de contrôle de la rotation de ladite au moins une turbomachine tangentielle 28. Le moteur 36 est par exemple adapté à entraîner la turbine 32 en rotation, à une vitesse comprise entre 200 tour/min et 14 000 tour/min. Ceci permet notamment de limiter le bruit généré par la turbomachine 28. Le moteur 36 (ou motoréducteur) est adapté à entraîner en rotation la turbine 32 autour son axe de rotation A32. Le moteur 36 électrique est disposé sur la paroi externe du boîtier 24.

Comme illustré sur la Figure 3, le moteur 36 comporte plus particulièrement au moins une entrée 38 et au moins une sortie d'air 39. La sortie d'air 39 peut plus particulièrement être disposée sur un capot 40 du moteur 36, ledit capot 40 recouvrant plus particulièrement le stator et les bobines (non représentées) du moteur 36.

Selon un mode de réalisation du capot 40, celui-ci a une forme en coupelle circulaire comportant une paroi de fond 40a et un rebord périphérique 40b. La sortie d'air 39 dudit moteur 36 électrique est par exemple réalisée par au moins un orifice 44 agencé dans la paroi de fond 40a dudit capot 40. La forme en coupelle permet de faciliter l'installation du capot 40 sur le moteur 36 électrique, elle permet également de couvrir un maximum de surface du moteur 36 électrique notamment de son stator et des bobines.

Le capot 40 en forme de coupelle comprend notamment une pluralité d'orifices 44 qui sont répartis autour de l'axe de révolution A40 du capot 40 du moteur 36 électrique, comme illustré notamment sur la Figure 3. La pluralité d'orifices 44 permet de démultiplier la surface de passage de la sortie d'air 39 du moteur 36 électrique tout en garantissant une stabilité du capot 40, notamment dans le cas où celui-ci présente une forme en coupelle.

Plus précisément, les orifices 44 du capot 40 sont répartis avec un écart angulaire régulier autour de l'axe de révolution A40 du capot 40 du moteur 36 électrique. Ce mode de réalisation permet de faciliter la mise en forme du capot 40 lors de sa fabrication. Selon une variante, l'écart entre deux orifices 44 voisins n'est pas le même pour tous les orifices 44 du capot 40, comme illustré par exemple sur la Figure 3.

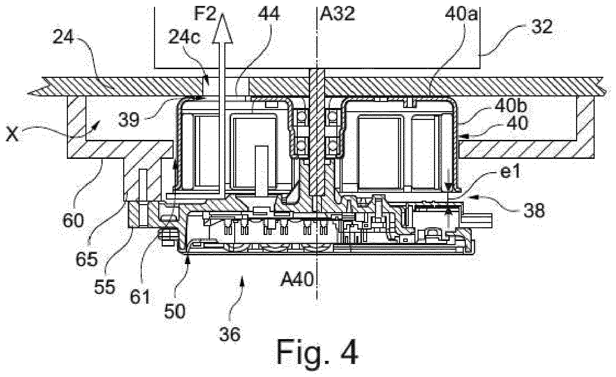

Par ailleurs, le moteur 36 comprend notamment un boîtier d'alimentation 50 dudit moteur électrique 36, comme illustré sur la Figure 3. D'une manière générale, le capot 40 est disposé de sorte à faire face audit boîtier d'alimentation 50. L'entrée d'air 39 du moteur 36 électrique est plus particulièrement formée par un espace (représenté par une double flèche e1 sur la Figure 4) ménagé entre ledit boîtier d'alimentation 50 et le rebord périphérique du capot 40. Cet espace e1 permet notamment la circulation d'un deuxième flux d'air F2 entre l'entrée d'air 38 et la sortie d'air 39 du moteur 36. Ce deuxième flux d'air F2 est représenté par une épaisse flèche noire sur la Figure 4.

Le trajet emprunté par le deuxième flux d'air F2 passe notamment par l'entrée d'air 38 au niveau de l'espace e1, le deuxième flux d'air F2 circule ainsi dans le plan formé par les axes X et Z dans un premier temps, puis le deuxième flux d'air F2 passe à travers le moteur 36 et à travers les orifices 44 du capot 40, parallèlement à l'axe Y.

Le deuxième flux d'air F2 désigne plus particulièrement une masse d'air mise en mouvement par la dépression générée par la turbomachine 28. Plus particulièrement, une mise en route de la turbomachine 28 génère une différence de pression entre la première ouverture d'aspiration 24a et l'entrée de la turbomachine 28. Autrement dit, la pression à l'entrée de la turbomachine 28 est moins importante qu'à l'extérieur du module de refroidissement 22, ce qui permet de déplacer une masse d'air formant le deuxième flux d'air F2 à travers le boîtier 24.

Toujours comme illustré par la figure 4, le boîtier 24 du module de refroidissement 22 comporte une deuxième ouverture d'aspiration 24c afin de permettre le passage du deuxième flux d'air F2 au sein du module de refroidissement 22. La deuxième ouverture d'aspiration 24c du boîtier 24 se situe par exemple sur une face latérale du module de refroidissement 22, la face latérale s'étendant perpendiculairement à l'axe A32 de la turbomachine tangentielle 28, comme illustré sur toutes les figures à partir de la Figure 4. Le module de refroidissement 22 comprend plus particulièrement deux faces latérales disposée de part et d'autre du boîtier 24, ces faces latérales sont parallèles au plan généré par les axes X et Z.

La sortie d'air 39 du moteur 36 électrique est en connexion fluidique avec la deuxième ouverture d'aspiration 24c de sorte à permettre la circulation du deuxième flux d'air F2 destiné à refroidir le moteur 36 en circulant à travers la deuxième ouverture d'aspiration 24c, puis à travers l'entrée 38, au travers du moteur 36 avant d'être expulsé par la sortie d'air 39 du moteur 36 électrique pour rejoindre le premier flux d'air F1 au sein du boîtier 24.

Comme illustré par la figure 4, le boîtier 24 peut comporter un carter 60 formant une chambre X à l'intérieur de laquelle débouche à la fois la deuxième ouverture d'aspiration 24c et la sortie d'air 39 du moteur 36 électrique afin de les mettre en connexion fluidique. Le carter 60 comporte une ouverture 61 dans laquelle est insérée le moteur 36 électrique et plus particulièrement son capot 40 de sorte que l'entrée d'air 38 du moteur 36 électrique soit en dehors de la chambre X. Le moteur 36 électrique peut notamment être fixé sur ce carter 60 au moyen de pattes de fixations 55 venant en regard d'éléments de fixation 65 du carter 60. Le moteur 36 électrique peut ainsi être fixé sur le carter 60 au moyen de vis, clips ou encore rivets. D'autres moyens de fixation du carter 60 sur le boîtier d'alimentation 50 peuvent être envisagés.

Le niveau de dépression et la température de l'air aspiré à travers la deuxième ouverture d'aspiration 24c impactent la fraîcheur du deuxième flux d'air F2: un niveau de dépression élevé augmente la fraîcheur du deuxième flux d'air F2. La température du deuxième flux d'air F2 dépend en grande partie de l'endroit auquel est aspiré l'air pour former ce deuxième flux d'air F2. L'on peut plus particulièrement distinguer trois zones d'aspiration 81, 82 et 83 à proximité du module de refroidissement 22 pour fournir l'air destiné à traverser l'entrée 38 du capot 40 pour refroidir le moteur 36. Ces zones d'aspiration 81, 82, 83 sont par exemple toutes à pression atmosphérique, mais elles se démarquent les unes des autres par des températures d'air distinctes et par un placement distinct au niveau du module de refroidissement 22.

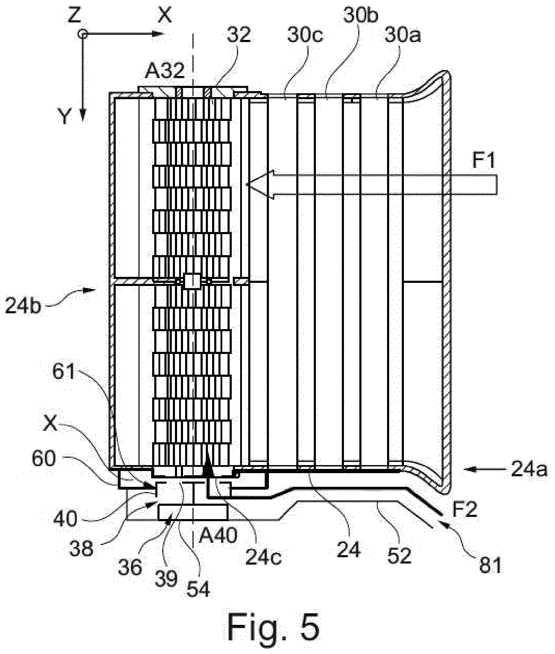

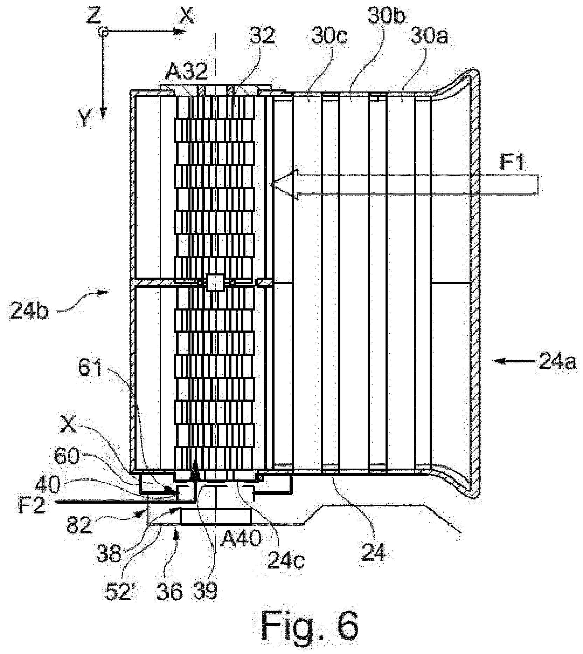

Comme illustré sur les figures 5 et 6, les zones d'aspiration 81 et 82 peuvent être déportées par rapport au positionnement de la turbine 32. Le module de refroidissement 22 comporte ainsi une conduite 52, 52' d'acheminement. Cette conduite 52, 52' comporte un logement recouvrant le au moins un moteur 36 électrique et un canal reliant afin de relier l'entrée d'air 38 du moteur 36 électrique et ces zones d'aspiration déportées 81, 82.

Comme illustré sur la figure 5, une première zone d'aspiration 81 déportée peut être située au niveau de la première ouverture d'aspiration 24a. Cette première zone d'aspiration 81 peut se définir par une température relativement fraîche qui correspond notamment à la température ambiante, c'est-à-dire qui est comprise dans un intervalle s'étendant de 10°C à 30°C. Une aspiration dans cette zone 81 permet d'augmenter l'efficacité du refroidissement du moteur 36.

Le module de refroidissement 22 comporte alors une conduite 52 d'acheminement d'air disposée sur une face externe du boîtier 24. La conduite 52 d'acheminement comporte notamment un logement 54 recouvrant le au moins un moteur 36 électrique et un canal reliant l'amont du boîtier 24 du module de refroidissement 22 au niveau de sa première ouverture d'aspiration 24a à la deuxième ouverture d'aspiration 24c dudit boîtier 24. La conduite 52 d'acheminement permet plus particulièrement de prélever de l'air frais dans la zone 81 à l'entrée du module de refroidissement 22 pour permettre un meilleur refroidissement du moteur 36.

Comme illustré sur la figure 6 une deuxième zone d'aspiration 82 déportée peut être par exemple située au niveau de la deuxième extrémité 24b. Cette deuxième zone d'aspiration 82 peut se définir quant à elle par une température relativement élevée, elle est par exemple de l'ordre de 55°C, voire supérieure ou égale à 60°C. Cette deuxième zone 82 est la plus proche de la turbomachine 28, ce qui permet de raccourcir le trajet de l'air aspiré jusqu'à l'entrée 38 du moteur 36, mais c'est également la zone dans laquelle la température de l'air aspiré est la plus chaude, ce qui peut réduire l'effet refroidissant du deuxième flux d'air F2 sur le moteur 36.

Le module de refroidissement 22 comporte alors une conduite 52' d'acheminement d'air disposée sur une face externe du boîtier 24, cette conduite 52' d'acheminement d'air permet plus particulièrement de prélever de l'air frais dans la zone 82. La conduite 52' d'acheminement d'air comprend un canal reliant l'aval du boîtier 24 du module de refroidissement 22 à la deuxième ouverture d'aspiration 24c dudit boîtier 24.

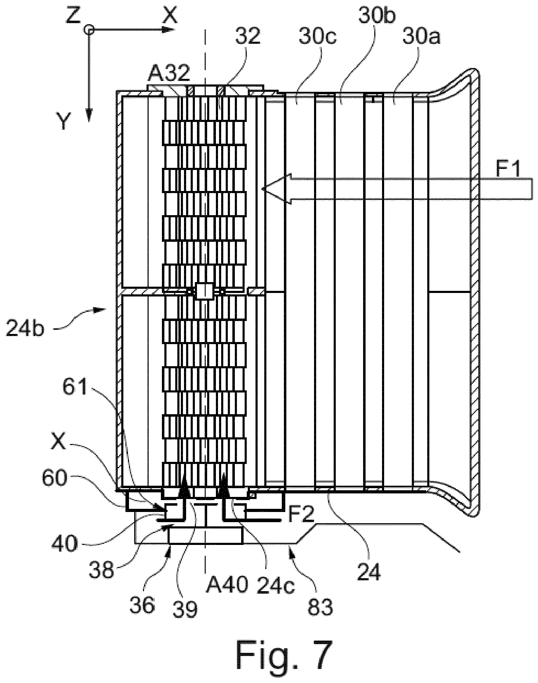

Comme illustré à la figure 7, une troisième zone 83 peut être située dans une zone contiguë à une face latérale du module de refroidissement 22, plus précisément au niveau de la turbine 32. La température de l'air aspiré dans cette troisième zone 83 est notamment comprise entre les températures respectives données en exemple pour les zones 81 et 82. Disposer l'entrée 38 du capot 40 dans cette troisième zone 83 peut avoir l'avantage de réduire l'encombrement du module de refroidissement 22. Un mode de réalisation du module de refroidissement exploitant l'avantage d'une aspiration de l'air dans cette troisième zone 83 est notamment illustré sur la Figure 7.

Le gradient de température observé entre les trois zones 81, 82 et 83 est dû au réchauffement du premier flux d'air F1 traversant le au moins un échangeur thermique 30a-30c.

L'on peut également imaginer une multitude de positionnements de la deuxième ouverture d'aspiration 24c du boîtier 24 au sein du module de refroidissement 22 pour assurer la connexion fluidique entre la sortie d'air 39 du moteur 36 et la deuxième ouverture d'aspiration 24c. La sortie d'air 39 du moteur 36 est par exemple disposée en vis-à-vis de la deuxième ouverture d'aspiration 24c du boîtier 24 comme illustré aux figures 4 à 7. Cette configuration est très avantageuse, car elle permet de raccourcir la connexion fluidique entre la sortie d'air 39 du moteur 36 et la deuxième ouverture d'aspiration 24c du boîtier 24.

De plus, selon une variante non représentée de cette configuration, il est tout à fait possible de s'imaginer s'affranchir de la présence d'un carter 60 et d'une chambre X afin de réaliser la connexion fluidique entre la sortie d'air 39 du moteur 36 électrique et la deuxième ouverture d'aspiration 24c. En effet, la connexion fluidique se ferait alors directement de l'un à l'autre.

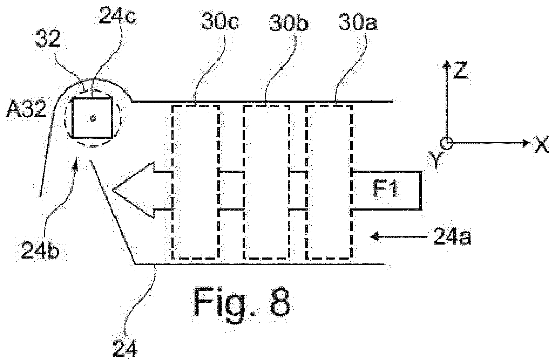

Selon un mode de réalisation schématisé sur les Figures 4 à 7 et plus particulièrement visible sur la figure 8, la deuxième ouverture d'aspiration 24c du boîtier 24 est par exemple disposée au niveau de l'axe A32 de la turbine 32 de la turbomachine tangentielle 28. Dans ce mode de réalisation, l'axe A32 de la turbine 32 et l'axe de révolution A40 du capot 40 du moteur 36 peuvent être confondus, cette particularité est notamment illustrée sur les Figures 4, 5, 6 et 7. Un tel agencement permet d'éviter un contact entre le deuxième flux d'air F2 et le au moins un échangeur de chaleur 30a-30c.

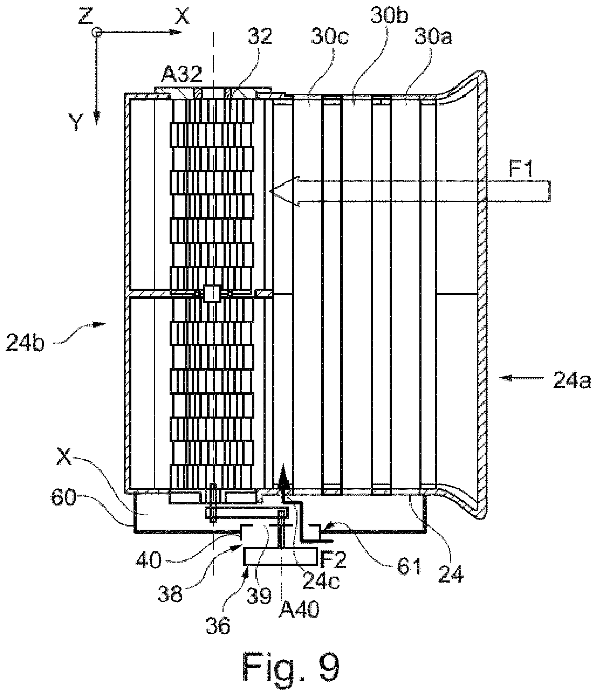

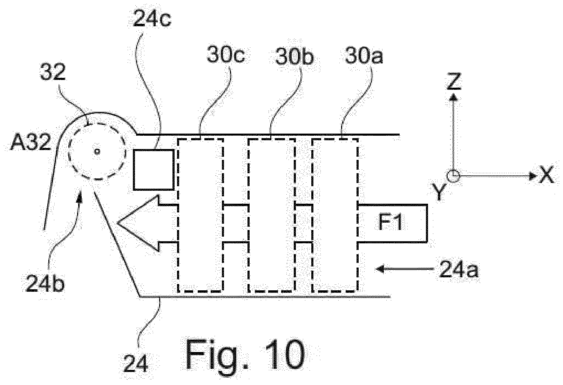

Selon un autre mode de réalisation schématisé sur les Figures 9 et 10, la deuxième ouverture d'aspiration 24c du boîtier 24 est disposée entre la turbomachine tangentielle 28 et le au moins un échangeur thermique 30a-30c. Dans cette configuration particulière, le deuxième flux d'air F2 expulsé par la sortie d'air 39 du capot 40 rejoint le premier flux d'air F1 à la sortie du au moins un échangeur thermique 30a-30c avant de suivre une trajectoire tangentielle au niveau de la turbine 32 de la turbomachine tangentielle 28. Le moteur est déporté de telle sorte que les axes A40 et A36 ne sont pas confondus, comme mis en évidence sur la Figure 9.

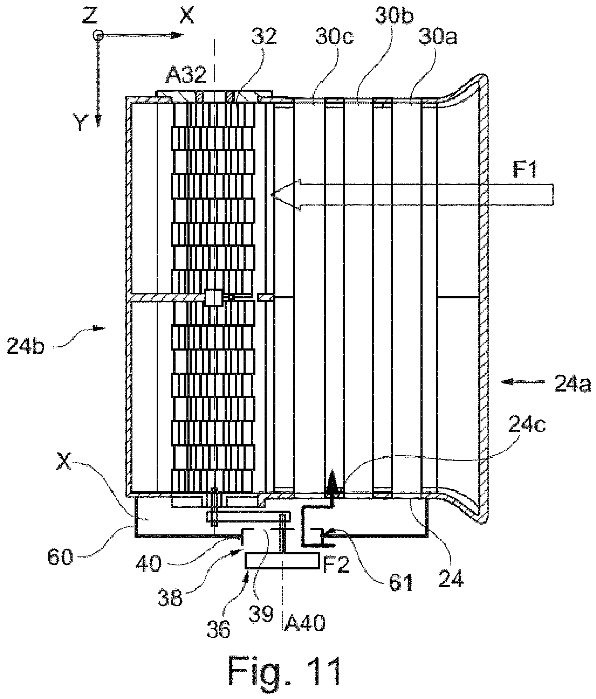

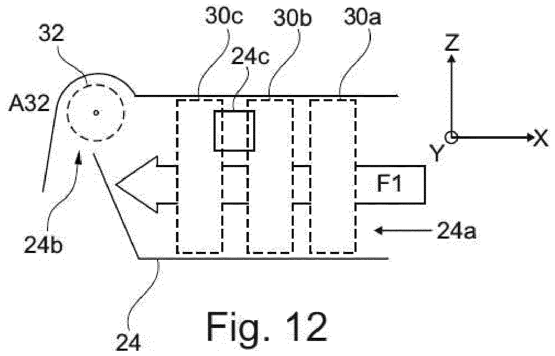

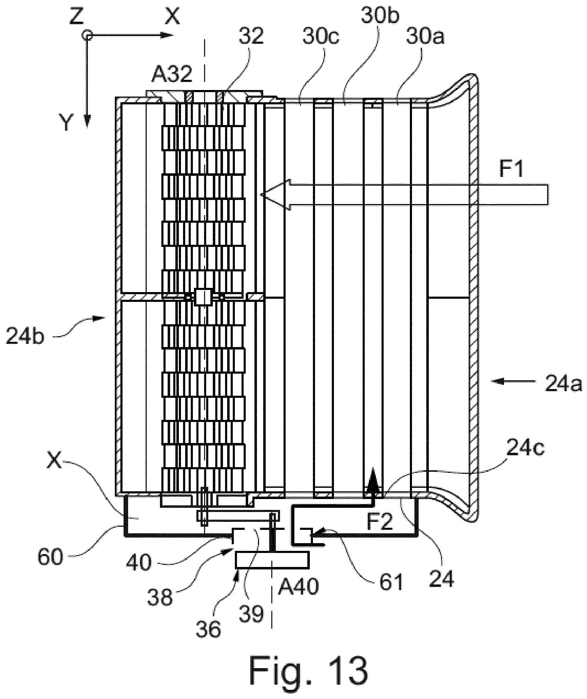

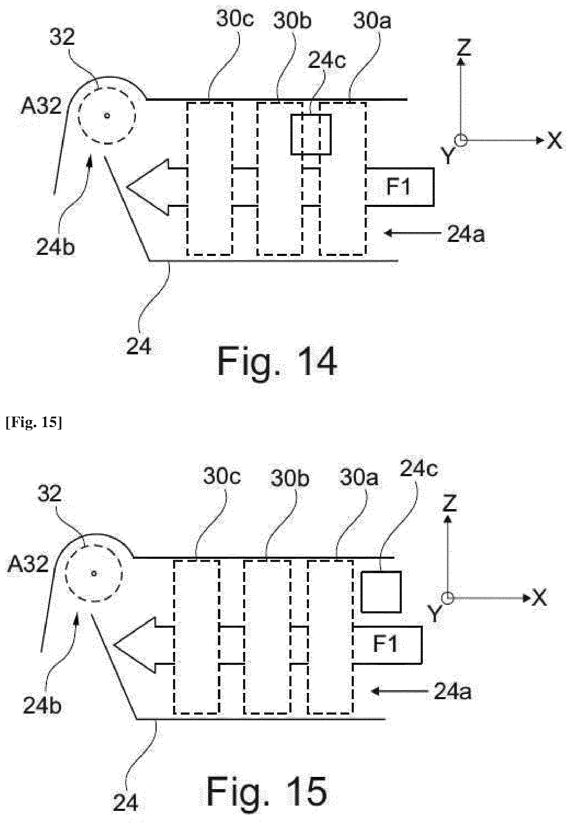

Selon un autre mode de réalisation, la deuxième ouverture d'aspiration 24c du boîtier 24 est par exemple disposée entre deux échangeurs thermiques de la pluralité d'échangeurs thermiques 30a-30c. Cette configuration est schématisée sur les figures 11, 12, 13 et 14. Plus particulièrement, la deuxième ouverture d'aspiration 24c du boîtier 24 est disposée entre les échangeurs thermiques 30b et 30c dans le cas des Figures 11 et 12, tandis que dans le cas des Figures 13 et 14, la deuxième ouverture d'aspiration 24c du boîtier 24 est disposée entre les échangeurs thermiques 30a et 30b. Dans ces exemples, le moteur 36 est déporté de telle sorte que les axes A40 et A36 ne sont pas confondus, comme mis en évidence sur les Figures 11 et 13.

Selon un autre mode de réalisation illustré sur la Figure 15, la deuxième ouverture d'aspiration 24c du boîtier 24 est disposée en amont du au moins un échangeur thermique 30a-30c. Dans cette configuration particulière, le deuxième flux d'air F2 expulsé par la sortie d'air 39 du capot 40 rejoint le premier flux d'air F1 avant que celui-ci ne traverse le au moins un échangeur thermique 30a-30c.

La configuration la plus avantageuse est celle qui combine une disposition de la sortie d'air 39 du capot 40 en vis-à-vis de la deuxième ouverture d'aspiration 24c avec une aspiration d'air dans la zone 81. Cette configuration particulière est représentée sur la Figure 5.

La configuration la plus simple à mettre en place est a priori celle qui combine une disposition de la sortie d'air 39 du capot 40 en vis-à-vis de la deuxième ouverture d'aspiration 24c avec une aspiration d'air dans la zone 83, car dans ce mode de réalisation particulier le boîtier 24 ne nécessite pas la présence d'une conduite 52, 52' d'acheminement d'air. Cette configuration particulière est représentée sur la Figure 7.

Selon un autre mode de réalisation du module de refroidissement 22 non représenté, celui-ci comporte au moins deux turbomachines tangentielles 28 disposées parallèlement les unes aux autres. Dans ce mode de réalisation particulier se présente notamment le cas où chaque turbomachine tangentielle 28 comporte un moteur électrique 36 dédié, le boîtier 24 comporte une deuxième ouverture d'aspiration individuelle associée à chaque moteur électrique. Ainsi chaque deuxième ouverture d'aspiration permet la circulation d'un flux d'air individuel, ces flux d'air étant destinés à refroidir chacun un moteur électrique 36 qui leur est associé.

L'invention n'est pas limitée aux exemples de réalisation décrits en regard des figures et d'autres modes de réalisation selon les revendications apparaîtront clairement à l'homme du métier. Notamment, les différents exemples peuvent être combinés, tant qu'ils ne sont pas contradictoires.

## Revendications

1. Module de refroidissement (22) pour véhicule automobile (10) à moteur électrique (12), comprenant :
- au moins un échangeur thermique (30a-30c)
- au moins une turbomachine tangentielle (28) apte à créer un premier flux d'air (F1) traversant le au moins un échangeur thermique (30a-30c),
- un boîtier (24) configuré pour loger le au moins un échangeur thermique (30a-30c) et ladite au moins une turbomachine tangentielle (28), le boîtier (24) comportant une première ouverture d'aspiration (24a) et une ouverture d'évacuation (24b) entre lesquelles circule le premier flux d'air (F1),
- au moins un moteur (36) électrique de contrôle de la rotation de ladite au moins une turbomachine tangentielle (28), le moteur (36) électrique étant disposé sur la paroi externe du boîtier (24), ledit moteur (36) électrique comprenant au moins une entrée (38) et une sortie d'air (39),
le module de refroidissement (22) étant **caractérisé en ce que** le boîtier (24) comporte une deuxième ouverture d'aspiration (24c), la sortie d'air (39) du au moins un moteur (36) électrique étant en connexion fluidique avec ladite deuxième ouverture d'aspiration (24c) de sorte à permettre la circulation d'un deuxième flux d'air (F2) passant successivement par l'entrée d'air (38) du moteur (36) électrique, la sortie d'air (39) du moteur (36) électrique et la deuxième ouverture d'aspiration (24c) du boîtier (24) pour rejoindre le premier flux d'air (F1) au sein du boîtier (24).

2. Module de refroidissement (22) selon la revendication précédente, **caractérisé en ce que** le boîtier (24) comporte un carter (60) formant une chambre (X) à l'intérieur de laquelle débouche à la fois la deuxième ouverture d'aspiration (24c) et la sortie d'air (39) du moteur (36) électrique, le carter (60) comportant une ouverture (61) dans laquelle est inséré le moteur (36) électrique de sorte que l'entrée d'air (38) du moteur (36) électrique soit en dehors de la chambre (X).

3. Module de refroidissement (22) selon l'une quelconque des
revendications 1 ou 2, **caractérisé en ce que** le moteur (36) électrique comporte un capot (40) ayant une forme en coupelle circulaire comportant une paroi de fond (40a) et un rebord périphérique (40b), la sortie d'air dudit moteur (36) électrique étant réalisée par au moins un orifice (44) agencé dans la paroi de fond (40a) dudit capot (40).

4. Module de refroidissement (22) selon la revendication précédente, **caractérisé en ce qu'**une pluralité d'orifices (44) sont répartis autour de l'axe de révolution (A40) du capot (40) en forme de coupelle du moteur (36) électrique.

5. Module de refroidissement (22), selon l'une quelconque des
revendications précédentes, **caractérisé en ce que** la sortie d'air (39) du moteur (36) électrique est disposée en vis-à-vis de la deuxième ouverture d'aspiration (24c) du boîtier (24).

6. Module de refroidissement (22), selon l'une quelconque des
revendications précédentes, **caractérisé en ce que** la deuxième ouverture d'aspiration (24c) du boîtier (24) se situe sur une face latérale du module de refroidissement, la face latérale s'étendant perpendiculairement à l'axe (A32) de la turbine (32) de la turbomachine tangentielle (28).

7. Module de refroidissement (22), selon l'une quelconque des
revendications précédentes, **caractérisé en ce que** la deuxième ouverture d'aspiration (24c) du boîtier (24) est disposée au niveau de l'axe (A32) de la turbine (32) de la turbomachine tangentielle (28).

8. Module de refroidissement (22) selon l'une quelconque des
revendications 1 à 6, caractérisé ce que la deuxième ouverture d'aspiration (24c) du boîtier (24) est disposée en amont du au moins un échangeur thermique (30a-30c).

9. Module de refroidissement (22), selon l'une quelconque des
revendications 1 à 8, **caractérisé en ce qu'**il comporte une pluralité d'échangeurs thermiques (30a-30c), notamment alignés suivant un axe d'empilement, et **en ce que** la deuxième ouverture d'aspiration (24c) du boîtier (24) est disposée entre deux échangeurs thermiques de la pluralité d'échangeurs thermiques (30a-30c).

10. Module de refroidissement (22), selon l'une quelconque des revendications précédentes, **caractérisé en ce qu'**il comporte une conduite (52, 52') d'acheminement d'air disposée sur une face externe du boîtier (24), ladite conduite (52, 52') d'acheminement comportant un logement recouvrant le au moins un moteur (36) électrique et un canal reliant l'entrée d'air (38) du moteur (36) électrique à une zone d'aspiration déportée (81,82) du boîtier (24) du module de refroidissement (22).

## Patentansprüche

1. Kühlmodul (22) für ein Kraftfahrzeug (10) mit Elektromotor (12), umfassend:
- mindestens einen Wärmetauscher (30a - 30c)
- mindestens eine Tangential-Turbomaschine (28), die dazu in der Lage ist, einen ersten Luftstrom (F1) zu erzeugen, der durch den mindestens einen Wärmetauscher (30a - 30c) strömt,
- ein Gehäuse (24), das dazu konfiguriert ist, den mindestens einen Wärmetauscher (30a - 30c) und die mindestens eine Tangential-Turbomaschine (28) aufzunehmen, wobei das Gehäuse (24) eine erste Ansaugöffnung (24a) und eine Auslassöffnung (24b) aufweist, zwischen denen der erste Luftstrom (F1) strömt,
- mindestens einen Elektromotor (36) zur Steuerung der Rotation der mindestens einen Tangential-Turbomaschine (28), wobei der Elektromotor (36) an der Außenwand des Gehäuses (24) angeordnet ist, wobei der Elektromotor (36) mindestens einen Lufteinlass (38) und einen Luftauslass (39) umfasst,
wobei das Kühlmodul (22) **dadurch gekennzeichnet ist, dass** das Gehäuse (24) eine zweite Ansaugöffnung (24c) aufweist, wobei der Luftauslass (39) des mindestens einen Elektromotors (36) in Fluidverbindung mit der zweiten Ansaugöffnung (24c) steht, um die Zirkulation eines zweiten Luftstroms (F2) zu ermöglichen, der nacheinander durch den Lufteinlass (38) des Elektromotors (36), den Luftauslass (39) des Elektromotors (36) und die zweite Ansaugöffnung (24c) des Gehäuses (24) strömt, um sich mit dem ersten Luftstrom (F1) innerhalb des Gehäuses (24) zu vereinigen.

2. Kühlmodul (22) nach dem vorangehenden Anspruch, **dadurch gekennzeichnet, dass** das Gehäuse (24) einen Kasten (60) aufweist, der eine Kammer (X) bildet, in deren Inneres sowohl die zweite Ansaugöffnung (24c) als auch der Luftauslass (39) des Elektromotors (36) münden, wobei der Kasten (60) eine Öffnung (61) aufweist, in die der Elektromotor (36) eingesetzt ist, so dass sich der Lufteinlass (38) des Elektromotors (36) außerhalb der Kammer (X) befindet.

3. Kühlmodul (22) nach einem der Ansprüche 1 oder 2, **dadurch gekennzeichnet, dass** der Elektromotor (36) eine Abdeckung (40) mit der Form einer kreisförmigen Schale aufweist, die eine Bodenwand (40a) und einen Umfangsrand (40b) aufweist, wobei der Luftauslass des Elektromotors (36) durch mindestens eine Öffnung (44) erfolgt, die in der Bodenwand (40a) der Abdeckung (40) ausgebildet ist.

4. Kühlmodul (22) nach dem vorangehenden Anspruch, **dadurch gekennzeichnet, dass** eine Vielzahl von Öffnungen (44) um die Rotationsachse (A40) der schalenförmigen Abdeckung (40) des Elektromotors (36) herum verteilt sind.

5. Kühlmodul (22) nach einem der vorangehenden Ansprüche, **dadurch gekennzeichnet, dass** der Luftauslass (39) des Elektromotors (36) gegenüber der zweiten Ansaugöffnung (24c) des Gehäuses (24) angeordnet ist.

6. Kühlmodul (22) nach einem der vorangehenden Ansprüche, **dadurch gekennzeichnet, dass** sich die zweite Ansaugöffnung (24c) des Gehäuses (24) an einer Seitenfläche des Kühlmoduls befindet, wobei sich die Seitenfläche senkrecht zur Achse (A32) der Turbine (32) der Tangential-Turbomaschine (28) erstreckt.

7. Kühlmodul (22) nach einem der vorangehenden Ansprüche, **dadurch gekennzeichnet, dass** die zweite Ansaugöffnung (24c) des Gehäuses (24) an der Achse (A32) der Turbine (32) der Tangential-Turbomaschine (28) angeordnet ist.

8. Kühlmodul (22) nach einem der Ansprüche 1 bis 6, **dadurch gekennzeichnet, dass** die zweite Ansaugöffnung (24c) des Gehäuses (24) stromaufwärts des mindestens einen Wärmetauschers (30a - 30c) angeordnet ist.

9. Kühlmodul (22) nach einem der Ansprüche 1 bis 8, **dadurch gekennzeichnet, dass** es eine Vielzahl von Wärmetauschern (30a - 30c) aufweist, die insbesondere entlang einer Stapelachse ausgerichtet sind, und dass die zweite Ansaugöffnung (24c) des Gehäuses (24) zwischen zwei Wärmetauschern der Vielzahl von Wärmetauschern (30a - 30c) angeordnet ist.

10. Kühlmodul (22) nach einem der vorangehenden Ansprüche, **dadurch gekennzeichnet, dass** es eine Luftförderleitung (52, 52') aufweist, die an einer Außenseite des Gehäuses (24) angeordnet ist, wobei die Förderleitung (52, 52') Folgendes aufweist: eine Aufnahme, die den mindestens einen Elektromotor (36) bedeckt, und einen Kanal, der den Lufteinlass (38) des Elektromotors (36) mit einer versetzten Ansaugzone (81, 82) des Gehäuses (24) des Kühlmoduls (22) verbindet.

## Claims

1. Cooling module (22) for a motor vehicle (10) with an electric motor (12), comprising:
- at least one heat exchanger (30a-30c),
- at least one tangential-flow turbomachine (28) capable of creating a first air stream (F1) passing through the at least one heat exchanger (30a-30c),
- a housing (24) configured to accommodate the at least one heat exchanger (30a-30c) and said at least one tangential-flow turbomachine (28), the housing (24) comprising a first intake opening (24a) and a discharge opening (24b) between which the first air stream (F1) flows,
- at least one electric motor (36) for controlling the rotation of said at least one tangential-flow turbomachine (28), the electric motor (36) being positioned on the outer wall of the housing (24), said electric motor (36) comprising at least one air inlet (38) and one air outlet (39),
the cooling module (22) being **characterized in that** the housing (24) comprises a second intake opening (24c), the air outlet (39) of the at least one electric motor (36) being fluidly connected to said second intake opening (24c) so as to allow the flow of a second air stream (F2) passing in succession through the air inlet (38) of the electric motor (36), the air outlet (39) of the electric motor (36) and the second intake opening (24c) of the housing (24) to join the first air stream (F1) inside the housing (24).

2. Cooling module (22) according to the preceding claim, **characterized in that** the housing (24) comprises a casing (60) forming a chamber (X) into which both the second intake opening (24c) and the air outlet (39) of the electric motor (36) emerge, the casing (60) comprising an opening (61) into which the electric motor (36) is inserted so that the air inlet (38) of the electric motor (36) is outside the chamber (X).

3. Cooling module (22) according to either one of Claims 1 and 2, **characterized in that** the electric motor (36) comprises a cover (40) having a circular cup shape comprising a bottom wall (40a) and a peripheral rim (40b), the air outlet of said electric motor (36) being formed by at least one orifice (44) arranged in the bottom wall (40a) of said cover (40).

4. Cooling module (22) according to the preceding claim, **characterized in that** a plurality of orifices (44) are distributed about the axis of revolution (A40) of the cup-shaped cover (40) of the electric motor (36).

5. Cooling module (22) according to any one of the preceding claims, **characterized in that** the air outlet (39) of the electric motor (36) is positioned facing the second intake opening (24c) of the housing (24).

6. Cooling module (22) according to any one of the preceding claims, **characterized in that** the second intake opening (24c) of the housing (24) is situated on a lateral face of the cooling module, the lateral face extending perpendicular to the axis (A32) of the turbine (32) of the tangential-flow turbomachine (28).

7. Cooling module (22) according to any one of the preceding claims, **characterized in that** the second intake opening (24c) of the housing (24) is positioned level with the axis (A32) of the turbine (32) of the tangential-flow turbomachine (28).

8. Cooling module (22) according to any one of Claims 1 to 6, **characterized in that** the second intake opening (24c) of the housing (24) is positioned upstream of the at least one heat exchanger (30a-30c).

9. Cooling module (22) according to any one of Claims 1 to 8, **characterized in that** it comprises a plurality of heat exchangers (30a-30c), in particular aligned along a stacking axis, and **in that** the second intake opening (24c) of the housing (24) is positioned between two heat exchangers of the plurality of heat exchangers (30a-30c).

10. Cooling module (22) according to any one of the preceding claims, **characterized in that** it comprises an air delivery duct (52, 52') positioned on an outer face of the housing (24), said delivery duct (52, 52') comprising a recess covering the at least one electric motor (36) and a channel connecting the air inlet (38) of the electric motor (36) to an offset intake zone (81, 82) of the housing (24) of the cooling module (22) .
